# EUROPÄISCHE PATENTSCHRIFT

(11) **EP 1 253 344 B1**
(45) Veröffentlichungstag und Bekanntmachung des Hinweises auf die Patenterteilung: **09.11.2005**
(21) Anmeldenummer: 01110400.7
(22) Anmeldetag: 27.04.2001
(51) Int. Cl.: F16F 9/04

(54) **Luftfederbalg**
Air spring rolling lobe
Soufflet de ressort pneumatique

(43) Veröffentlichungstag der Anmeldung: 30.10.2002
(73) Patentinhaber: ContiTech Luftfedersysteme GmbH, 30165 Hannover (DE)
(72) Erfinder: Binder, Klaus, Dr., 31157 Sarstedt (DE)
(74) Vertreter: Finger, Karsten

(56) Entgegenhaltungen:
- DE-A- 3 643 073
- DE-A- 4 423 601
- DE-A- 19 716 250
- US-A- 5 975 506
- PATENT ABSTRACTS OF JAPAN vol. 018, no. 411 (M-1648), 2. August 1994 (1994-08-02) & JP 06 117733 A (GENZO HASHIMOTO;OTHERS: 01), 28. April 1994 (1994-04-28)
- PATENT ABSTRACTS OF JAPAN vol. 015, no. 101 (M-1091), 11. März 1991 (1991-03-11) & JP 03 000337 A (YOKOHAMA RUBBER CO LTD:THE), 7. Januar 1991 (1991-01-07)
- PATENT ABSTRACTS OF JAPAN vol. 015, no. 457 (M-1181), 20. November 1991 (1991-11-20) & JP 03 194280 A (YOKOHAMA RUBBER CO LTD:THE), 23. August 1991 (1991-08-23)

## Beschreibung

Die Erfindung betrifft einen Luftfederbalg aus elastomerem Werkstoff mit zumindest zwei sich kreuzenden Lagen aus Verstärkungsfäden, wobei die Verstärkungsfäden zur Balgumfangsrichtung unter einem Winkel von 40 bis 80 ° geneigt und innerhalb einer Lage im Wesentlichen parallel zueinander angeordnet sind.

Luftfedern haben sich z. B. als Fahrzeugfederungen, insbesondere zur Abfederung der Radachsen von Lastkraftwagen und Autobussen, in großem Umfang bewährt. Auch in Personenkraftwagen erfährt der Einsatz von Luftfedern einen Bedeutungszuwachs, denn sie bieten ausgewogenen Komfort auf hohem Niveau selbst bei sportlich abgestimmten Fahrwerken.

Eine Luftfeder weist Lagen aus in Gummi eingebetteten, parallel verlaufenden Verstärkungsfäden, auch Festigkeitsträgerlagen genannt, auf, welche die durch den Überdruck in dem Luftfederbalg entstehenden Kräfte aufnehmen. Bei den Verstärkungsfäden handelt es sich im Allgemeinen um so genannte Cordfäden, bei denen mehrere Einzelfasern (Filamente) zu einem fadenförmigen Gebilde verzwirnt sind. Die Verstärkungsfäden bestehen vorzugsweise aus vollsynthetischen Fasern, die eine hohe Biegetüchtigkeit, Festigkeit und gleichmäßige Dehnfähigkeit aufweisen, wie z. B. Polyester, Polyamid oder Aramid. Sie können aber auch aus Metall bestehen.

Beim üblichen Verfahren zur Herstellung von Luftfedern werden die einzelnen unvulkanisierten Bauelemente der Luftfeder (Innengummi, Festigkeitsträgerlagen, Außengummi und gegebenenfalls Drahtkerne) zu einem Luftfederrohling gewickelt (konfektioniert), und dieser Rohling wird dann vulkanisiert. Bei diesem Verfahren verwendet man für die Festigkeitsträgerlagen in der Regel gummierte Cordgewebelagen.

Das Cordgewebe besteht aus einer Vielzahl parallel nebeneinander und in Kettrichtung liegender Cordfäden, die in größeren Abständen von wenigen dünnen Fäden in Schussrichtung lose zusammengehalten werden. Diese Cordgewebe werden nach einem Imprägniervorgang zur Erhöhung der Gummihaftung (Gewebepräparation) mit einer geeigneten Kautschukmischung, wie z. B. einer Mischung auf Basis von Chloroprenkautschuk, gummiert und nach dem Schrägschneiden in der gewünschten Lagenzahl so auf den Rohling gewickelt, dass die Fäden der verschiedenen Lagen kreuzweise, vorzugsweise unter einem Fadenwinkel von 40 bis 80 ° zur Umfangsrichtung zum Liegen kommen. Mit dem Fadenwinkel können bei gegebener Luftfederkontur Tragkraft und Seitenkraft der Luftfeder beeinflusst werden.

Ein anderes Verfahren zur Herstellung von Luftfedern ist z. B. in der DE 198 46 852 A1 beschrieben. Bei diesem Verfahren werden fadenverstärkte, aus mehreren Schichten bestehende Schlauchrohlinge, wie z. B. Schlauchrollbälge für Luftfedern, kontinuierlich durch das spiralförmige Umwickeln eines beschichteten Dorns mit Verstärkungsfäden hergestellt. Überlappungs- und Stoßbereiche werden durch dieses Verfahren vermieden.

Neuere Entwicklungen von Fahrzeugen bzw. Fahrwerken, besonders im PKW-Bereich, verlangen nach zunehmend kleineren Luftfedertypen mit entsprechend ansteigenden Betriebsdrücken. Um diesen Drücken standzuhalten, das heißt einen möglichst hohen Berstdruck zu realisieren, und gleichzeitig eine hohe Biegefestigkeit und damit eine hohe Lebensdauer der Luftfedern zu gewährleisten, werden besonders hohe Anforderungen an die Lagen aus Verstärkungsfäden gestellt. Die Zahl der Lagen darf nicht zu groß sein, um eine hohe Flexibilität zu erzielen. Gleichzeitig muss die Festigkeit und die Fadendichte der Verstärkungsfäden so gewählt werden, dass die Luftfeder einen möglichst hohen Berstdruck erreicht. Wird der Abstand der Fäden zu groß, so besteht die Gefahr, dass das Gummimaterial nicht ausreichend berstfest ist, und es zu einer punktuellen Zerstörung der Luftfeder in der lichten Weite zwischen den Fäden kommt.

Ein Luftfederbalg gemäß dem Oberbegriff des Anspruchs 1 ist z. B. aus der DE 197 16 250 A1 bekannt.

In der DE 44 23 601 C2 wird ein Luftfederrollbalg beschrieben, der eine hohe Standzeit bei hohen Innendrücken und kleinen Abrollradien in der Rollfalte aufweist. Dieser Rollbalg besitzt als Festigkeitsträgerlage drei übereinanderliegende, gummierte Cordgewebelagen, wobei die mittlere Cordgewebelage eine Lagenfestigkeit aufweist, die der Summe der Lagenfestigkeiten der ersten und dritten Lage entspricht. Das Gewebe innerhalb ein und derselben Lage besteht aus einheitlichen Cordfäden, dass heißt, aus Cordfäden aus demselben Material und mit identischer Cordkonstruktion.

Aus der DE 36 43 073 A1 sind ferner Luftfederbälge bekannt, deren Verstärkungsfäden einlagig und parallel in Achsrichtung des Balges angeordnet sind. Die Verstärkungsfäden können aus verschiedenen Werkstoffen bestehen.

Der vorliegenden Erfindung liegt nun die Aufgabe zugrunde, einen Luftfederbalg mit einem ausreichenden Berstdruck und hoher Lebensdauer zu schaffen, der einfach und preiswert herzustellen ist.

Gelöst wird die Aufgabe erfindungsgemäß dadurch, dass zumindest eine Teilmenge der Verstärkungsfäden innerhalb einer Lage eine andere Festigkeit aufweist als die übrige Teilmenge, wobei sich die Verstärkungsfäden über den Balgumfang abwechseln und jeweils ein Verstärkungsfaden der einen Festigkeit neben einem Verstärkungsfaden der anderen Festigkeit angeordnet ist.

Der Grundgedanke der Erfindung ist darin zu sehen, dass bei Verwendung von hochfesten Verstärkungsfäden der Fadenabstand innerhalb einer Lage je nach gefordertem Berstdruck variiert werden kann. Allerdings ist bei größer werdendem Abstand zu beachten, dass ab einem bestimmten Abstand zwischen den Fäden die Festigkeit des Gummimaterials zum limitierenden Faktor für den Luftdruck in der Luftfeder wird. Um zu verhindern, dass das Gummimaterial im Bereich der lichten Weite zwischen den hochfesten Fäden punktuell zerstört wird, werden zwischen den hochfesten Verstärkungsfäden Verstärkungsfäden mit geringerer Festigkeit innerhalb der Lage so verteilt, dass diese Verstärkungsfäden den Bereich der lichten Weite zwischen den Fäden höherer Festigkeit überbrücken. Die Flexibilität der Balgwand und die Federungseigenschaften werden durch diese Maßnahme nicht beeinträchtigt, und hohe Standzeiten der Luftfeder werden erreicht.

Durch die Einbringung von Verstärkungsfäden unterschiedlicher Festigkeit und damit auch unterschiedlicher Reißdehnung innerhalb einer Lage kann außerdem die auftretende Dehnung (Nenndehnung) im normalen Belastungsfall im Vergleich zu der Dehnung einer Lage nur aus hochfestem Material zu höheren Werten hin verschoben werden. Damit können Druckspannungen, die z. B. bei Rollbälgen im Bereich der Rollfalte auftreten können und insbesondere zur Zerstörung des Rollbalges beitragen können, vermieden werden.

Luftfedern mit der erfindungsgemäßen Anordnung der Verstärkungsfäden lassen sich unkompliziert herstellen, indem z. B. bei den herkömmlichen Wickelverfahren Cordgewebelagen verwendet werden, deren Cordfäden unterschiedliche Festigkeiten aufweisen. Zur Anwendung können z. B. Hybridgewebe (Mischgewebe aus verschiedenen Fäden) kommen, bei denen neben Fäden aus dem einen Material auch Fäden eines anderen Materials vorliegen.

Ebenso einfach lässt sich die erfindungsgemäße Luftfeder nach einem kontinuierlichen Verfahren, wie es beispielsweise in der DE 198 46 852 A1 beschrieben ist, herstellen. Dem Positionierring und dem Umlenkelement werden vom Spulengatter Verstärkungsfäden mit unterschiedlichen Festigkeiten zugeführt, die dann auf dem beschichteten Dorn abgelegt werden.

Da Materialien mit hoher Festigkeit, die für Luftfedern eingesetzt werden können, häufig teurer sind als Materialien mit geringerer Festigkeit, kann man je nach gefordertem Berstdruck einen Teil der teureren Fäden durch preiswertere ersetzen. Die Materialkosten lassen sich in den erfindungsgemäßen Luftfedern problemlos optimieren.

Die Verstärkungsfäden mit den unterschiedlichen Festigkeiten sind innerhalb der Lage so angeordnet, dass sich die Verstärkungsfäden über den Balgumfang abwechseln und jeweils ein Verstärkungsfaden der einen Festigkeit neben einem Verstärkungsfaden der anderen Festigkeit angeordnet ist. Man erzielt so eine sehr gleichmäßige Verteilung der Fäden, die besonders gute Federeigenschaften gewährleistet, da Spannungsunterschiede in der Balgwand gering bleiben.

Je komplizierter die Anordnung der Fäden mit unterschiedlicher Festigkeit, desto geeigneter sind für die Herstellung der Luftfeder Verfahren, bei denen die Fäden der Lagen einzeln zugeführt und auf einen beschichteten Dorn gewickelt werden können. Diese Verfahren ermöglichen in einfacher Weise den beliebigen Ersatz einzelner Fäden einer Lage durch andere, ohne dass neue Gewebe hergestellt oder die Gewebe genau geschnitten und passgenau aufgelegt werden müssen.

Die unterschiedlichen Festigkeiten der Verstärkungsfäden können z. B. durch unterschiedliche Fadendurchmesser und/oder unterschiedliche Cordkonstruktionen der Fäden erreicht werden. Dabei können sich die Cordkonstruktionen z. B. durch die Anzahl der verwendeten Endlosfasern, die Drehrichtung und die Drehungszahl unterscheiden. Unterschiedliche Festigkeiten von Verstärkungsfäden können bei gleichem Grundmaterial auch dadurch erzielt werden, dass unterschiedliche Vorbehandlungsverfahren für die Herstellung der Verstärkungsfäden eingesetzt werden.

Besonders vorteilhaft ist es allerdings, wenn man die unterschiedlichen Festigkeiten der Verstärkungsfäden durch die Verwendung verschiedener Materialien erreicht. Die Fäden können dann bei unterschiedlicher Festigkeit in ihrer Konstruktion und ihrem Durchmesser gleich gestaltet sein, so dass die Lagen in ihrer äußeren Gestalt sehr gleichmäßig sind und bei Abrollvorgängen z. B. keine erhabenen Bereich zu verändertem Abrieb- oder Biegeverhalten führen können.

Als Verstärkungsfäden für die Luftfeder können z. B. Einzelfasern oder Corde aus Polyamid, Polyester, Aramid oder Reyon verwendet werden.

Gemäß einer vorteilhaften Weiterbildung der Erfindung sind die Verstärkungsfäden mit höherer Festigkeit Aramidfäden. Aramidfäden vereinigen hohe Festigkeit mit hohem Modul, hervorragender Dimensionsstabilität und Hitzefestigkeit. Als Aramide können z. B. sowohl Copolymerisate aus im Wesentlichen Terephthalsäure und p-Phenylendiamin (Para-Aramide), z. B. Kevlar® oder Twaron®, als auch Copolymerisate aus im Wesentlichen m-Phenylendiamin und Isophthalsäure (Meta-Aramide), z. B. Nomex®, verwendet werden. In die Copolymerisate können aber auch weitere Monomere mit einpolymerisiert sein. So können auch Terpolymerisate aus Terephthalsäure, p-Phenylendiamin und weiteren Monomeren, wie z. B. Technora®, angewendet werden.

Die Verstärkungsfäden mit geringerer Festigkeit sind vorteilhafterweise Polyamidfäden, z. B. Nylon, oder Polyesterfäden. Diese Fasern sind preiswert und ihre Festigkeit ist für die Überbrückung der Abstände zwischen den Fäden mit höherer Festigkeit ausreichend.

Bei den erfindungsgemäßen Luftfederbälgen kann es sich um Faltenbälge, Halbbälge oder Rollbälge handeln. Die Luftfederbälge sind auch für kleine Biegeradien, die bei Rollbälgen in der Abrollzone unzählige Male durchlaufen werden müssen, besonders geeignet. Außerdem kann man durch die Anordnung der Verstärkungsfäden unterschiedlicher Festigkeit und damit auch unterschiedlicher Reißdehnung innerhalb der Balgwand erreichen, dass die sich im Belastungsfall ergebende Dehnung im Vergleich zur Dehnung bei Verwendung von nur hochfesten Verstärkungsfäden größer wird. Bei Rollbälgen kann so die Entstehung von Druckspannungen im Bereich der Rollfalte, die zur Zerstörung des Luftfederbalges führen können, vermieden werden.

Im Folgenden wird die Erfindung anhand eines Ausführungsbeispiels im Zusammenhang mit der nachstehenden Figur näher erläutert, ohne jedoch auf dieses Beispiel beschränkt zu sein.

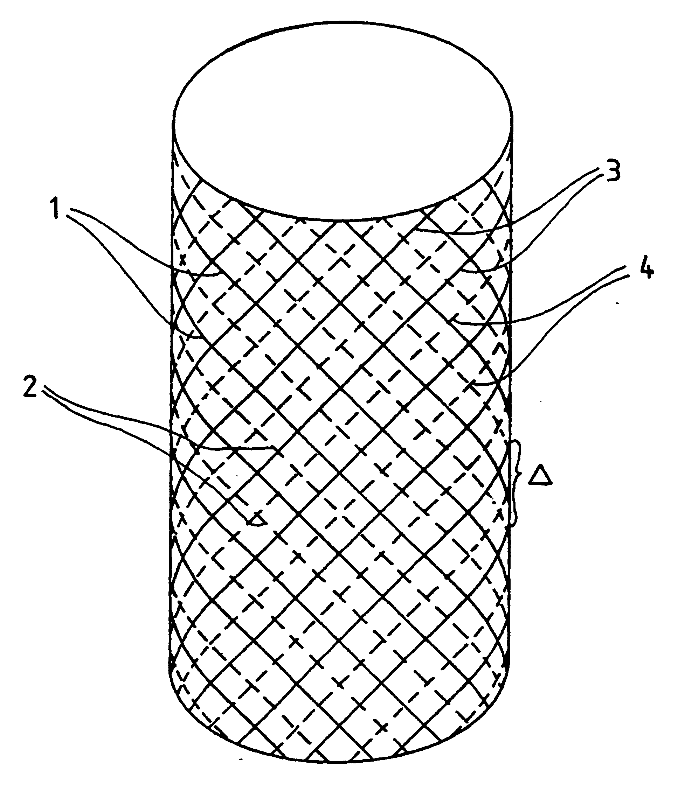

Die einzige Figur zeigt schematisch eine Anordnung von Verstärkungsfäden im mittleren Bereich eines Luftfederrollbalges.

In der Figur ist dargestellt, wie in einer erfindungsgemäßen Luftfeder mit zwei sich kreuzenden Verstärkungslagen die Verstärkungsfäden 1, 2, 3, 4 verlaufen. Diese Verstärkungsfäden 1, 2, 3, 4 sind in der fertigen Luftfeder vollständig von elastomerem Werkstoff (nicht in der Figur dargestellt) umgeben. Die Fäden 1 und 2 bilden die innere Lage, die Fäden 3 und 4 bilden die äußere Lage. Bei den Fäden 1 und 3 handelt es sich um Fäden mit einer höheren Festigkeit, z. B. Aramidfäden, die innerhalb einer Lage in einem Abstand Δ angeordnet sind. Im Zwischenraum zwischen zwei Aramidfäden 1, 3 befindet sich jeweils ein Faden 2, 4 mit geringerer Festigkeit, z. B. aus Polyamid oder Polyester. Die letztgenannten Fäden 2, 4 verstärken im fertigen Produkt das zwischen der Fäden 1, 3 befindliche Gummimaterial in ausreichendem Maße und verhindern die punktuelle Zerstörung (Platzen des Gummis) in diesen Bereichen bei den vorliegenden Betriebsdrücken. Diese Luftfeder kann zum einen dadurch hergestellt werden, dass bei dem Wickelverfahren entsprechende Hybridgewebe verwendet werden. Zum anderen kann die Luftfeder, wenn es sich um eine Luftfeder mit Schlauchrollbalg handelt, aus einem kontinuierlich hergestellten Schlauchrohling angefertigt werden, wobei bei der Produktion des Schlauchrohlings über ein Spulengatter die unterschiedlichen Verstärkungsfäden zugeführt werden.

## Patentansprüche

1. Luftfederbalg aus elastomerem Werkstoff mit zumindest zwei sich kreuzenden Lagen aus Verstärkungsfäden, wobei die Verstärkungsfäden zur Balgumfangsrichtung unter einem Winkel von 40 bis 80 ° geneigt und innerhalb einer Lage im Wesentlichen parallel zueinander angeordnet sind,
**dadurch gekennzeichnet,**
**dass** zumindest eine Teilmenge der Verstärkungsfäden (1, 2) innerhalb einer Lage eine andere Festigkeit aufweist als die übrige Teilmenge, wobei sich die Verstärkungsfäden (1, 2) über den Balgumfang abwechseln und jeweils ein Verstärkungsfaden (1) der einen Festigkeit neben einem Verstärkungsfaden (2) der anderen Festigkeit angeordnet ist.

2. Luftfederbalg nach Anspruch 1, **dadurch gekennzeichnet, dass** die unterschiedlichen Festigkeiten der Verstärkungsfäden (1, 2) durch die Verwendung verschiedener Materialien erreicht werden.

3. Luftfederbalg nach zumindest einem der Ansprüche 1 oder 2, **dadurch gekennzeichnet, dass** die Verstärkungsfäden mit höherer Festigkeit Aramidfäden (1) sind.

4. Luftfederbalg nach zumindest einem der Ansprüche 1 bis 3, **dadurch gekennzeichnet, dass** die Verstärkungsfäden mit geringerer Festigkeit Polyamid- oder Polyesterfäden (2) sind.

5. Luftfederbalg nach zumindest einem der Ansprüche 1 bis 4, **dadurch gekennzeichnet, dass** er ein Rollbalg ist.

## Claims

1. Air spring lobe of elastomeric material with at least two crossing layers of reinforcing filaments, the reinforcing filaments being inclined with respect to the circumferential direction of the lobe at an angle of 40 to 80° and arranged essentially parallel to one another within a layer, **characterized in that** at least a partial amount of the reinforcing filaments (1, 2) within a layer is of a different strength than the remaining partial amount, the reinforcing filaments (1, 2) alternating over the circumference of the lobe and a reinforcing filament (1) of one strength being respectively arranged next to a reinforcing filament (2) of the other strength.

2. Air spring lobe according to Claim 1, **characterized in that** the different strengths of the reinforcing filaments (1, 2) are achieved by the use of different materials.

3. Air spring lobe according to either of Claims 1 and 2, **characterized in that** the reinforcing filaments of higher strength are aramid filaments (1).

4. Air spring lobe according to at least one of Claims 1 to 3, **characterized in that** the reinforcing filaments of lower strength are polyamide or polyester filaments (2).

5. Air spring lobe according to at least one of Claims 1 to 4, **characterized in that** it is a rolling lobe.

## Revendications

1. Soufflet de ressort pneumatique, en matériau élastomère, qui présente au moins deux couches croisées de fils de renfort, les fils de renfort étant disposés sous un angle de 40 à 80° par rapport au sens de la périphérie du soufflet et étant disposés essentiellement en parallèle les uns aux autres dans une couche,
**caractérisé en ce que** la résistance mécanique d'au moins une partie des fils de renfort (1, 2) situés à l'intérieur d'une couche est différente de celle de l'autre partie, les fils de renfort (1, 2) étant disposés en alternance à la périphérie du soufflet et un fil de renfort (1) d'une résistance mécanique étant chaque fois disposé à côté d'un fil de renfort (2) de l'autre résistance mécanique.

2. Soufflet de ressort pneumatique selon la revendication 1, **caractérisé en ce que** les différentes résistances mécaniques des fils de renfort (1, 2) sont obtenues en recourant à des matériaux différents.

3. Soufflet de ressort pneumatique selon au moins l'une des revendications 1 ou 2, **caractérisé en ce que** les fils de renfort à plus haute résistance mécanique sont des fils (1) en aramide.

4. Soufflet de ressort pneumatique selon au moins l'une des revendications 1 à 3, **caractérisé en ce que** les fils de renfort à plus faible résistance mécanique sont des fils (2) en polyamide ou en polyester.

5. Soufflet de ressort pneumatique selon au moins l'une des revendications 1 à 4, **caractérisé en ce qu'**il est un soufflet d'amortissement.
